# EUROPÄISCHE PATENTSCHRIFT

(11) **EP 3 345 351 B1**
(45) Veröffentlichungstag und Bekanntmachung des Hinweises auf die Patenterteilung: **10.07.2019**
(21) Anmeldenummer: 16747496.4
(22) Anmeldetag: 02.08.2016
(51) Int. Cl.: H04L 12/40, H04L 12/413

(54) **VERFAHREN, VORRICHTUNG UND COMPUTERPROGRAMM ZUM BETREIBEN EINER DATENVERARBEITUNGSANLAGE**
METHOD, DEVICE, AND COMPUTER PROGRAM FOR OPERATING A DATA PROCESSING SYSTEM
PROCÉDÉ, DISPOSITIF ET PROGRAMME INFORMATIQUE POUR FAIRE FONCTIONNER UNE INSTALLATION DE TRAITEMENT DE DONNÉES

(30) Priorität: 03.09.2015 DE 102015216886
(43) Veröffentlichungstag der Anmeldung: 11.07.2018
(73) Patentinhaber: Robert Bosch GmbH, 70442 Stuttgart (DE)
(72) Erfinder: LOTHSPEICH, Timo, 71287 Weissach (DE); POEHNL, Michael, 75449 Wurmberg (DE); WAGNER, Marco Andreas, 71229 Leonberg (DE)
(86) Internationale Anmeldenummer: PCT/EP2016/068401
(87) Internationale Veröffentlichungsnummer: WO 2017/036706

(56) Entgegenhaltungen:
- EP-A2- 1 956 794
- US-A1- 2012 127 928
- US-A1- 2013 322 449

## Beschreibung

### Stand der Technik

Die Erfindung geht aus von einem Verfahren, einer Vorrichtung bzw. einem Computerprogramm zum Betreiben einer Datenverarbeitungsanlage.

US 2012/0127928 A1 offenbart eine Priorierung von Buffern, aus denen Datenpakete zu senden sind, anhand eines Fahrzustands eines Kraftfahrzeugs.

US 2013/0322449 A1 offenbart einen CAN Frame in dessen Daten eine service ID enthalten ist.

### Offenbarung der Erfindung

Das Verfahren mit den Merkmalen des unabhängigen Anspruchs 1 ermöglicht durch technische Maßnahmen die Nutzung Dienst-orientierter Kommunikation auf einer Datenverarbeitungsanlage bei der Nachrichten, die über eine Datenleitung gesendet werden, mittels in den einzelnen Nachrichten enthaltenen Identifizierern arbitriert werden.

Besonders vorteilhaft ist es, wenn eine an einem Knoten der Datenverarbeitungsanlage ankommende Nachricht nur dann in einem Speicher dieses Knotens übernommen wird, wenn Information über einen Dienst oder Information über einen Netzwerkknoten, die in dem Identifizierer enthalten ist, diesen Knoten als Empfänger bestimmt. Dadurch werden nur bestimmte ankommende Nachrichten empfangen. Dies ermöglicht den selektiven Empfang von Nachrichten durch einzelne Knoten insbesondere, wenn auf der Datenverarbeitungsanlage Nachrichten im Broadcast gesendet werden.

Ein Knoten, auf dem ein Dienst angeboten wird, oder der einen Dienst verwendet, empfängt dadurch Nachrichten, die für den Dienst relevant sind. Bieten mehrere Netzwerkknoten denselben Dienst an, oder fragen mehrere Netzwerkknoten den Dienst an, kann diese Nachricht unabhängig vom Sender erkannt und empfangen werden.

Ein Knoten, der Nachrichten von einem bestimmten Netzwerkknoten erwartet, empfängt dadurch Nachrichten, die von diesem Netzwerkknoten gesendet werden. Dadurch ist eine Unterscheidung mehrerer Sender anhand der Information über den Netzwerkknoten möglich.

Besonders vorteilhaft ist es, wenn eine an einem Knoten der Datenverarbeitungsanlage ankommende Nachricht nur dann in dem Speicher dieses Knotens übernommen wird, wenn die Information über den Dienst und die Information über den Netzwerkknoten diesen Knoten als Empfänger bestimmt. Dadurch ist eine Unterscheidung von Anbietern desselben Dienstes anhand des sendenden Knotens möglich. Dies ist insbesondere bei Datenverarbeitungsanlagen vorteilhaft, auf denen redundante Dienst-orientierte Funktionen ablaufen.

Weitere vorteilhafte Weiterbildungen ergeben sich aus den Unteransprüchen und den im Folgenden beschriebenen Ausführungsbeispielen.

Es zeigen
- Figur 1: schematisch einen Teil einer Datenverarbeitungsanlage,
- Figur 2: schematisch einen Teil einer Nachricht,
- Figur 3: schematisch einen ersten Signalflussplan,
- Figur 4: schematisch einen zweiten Signalflussplan,
- Figur 5: schematisch einen dritten Signalflussplan.

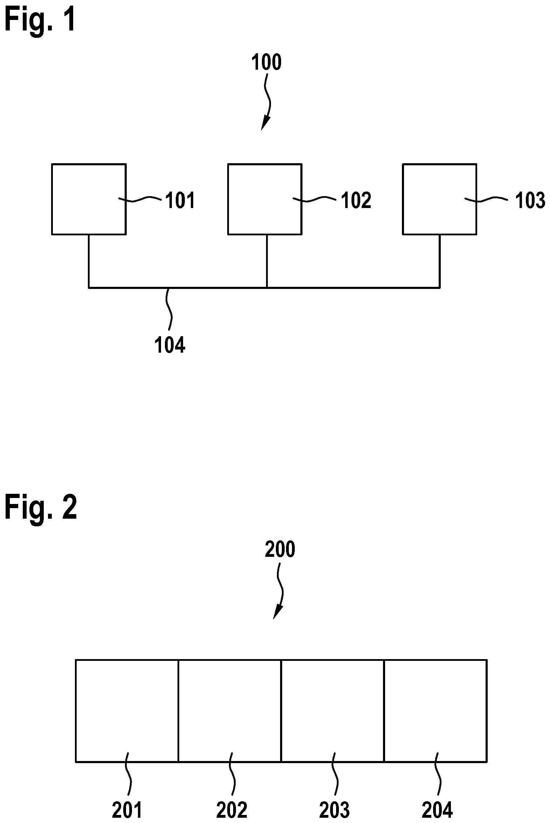

Im Folgenden wird eine in Figur 1 schematisch dargestellte Datenverarbeitungsanlage 100 beschrieben. In Figur 1 ist ein erster Knoten 101, ein zweiter Knoten 102 und ein dritter Knoten 103 dargestellt. Diese sind über eine Datenleitung 104 verbunden. Das bedeutet, die Datenverarbeitungsanlage umfasst mindestens zwei Knoten die über die Datenleitung 104 zur Übertragung von Nachrichten verbindbar sind. Es können auch mehr oder weniger als drei Knoten vorgesehen sein. Der dritte Knoten 103 ist im Beispiel ein optionales Gateway und kann Nachrichten gemäß eines ersten Protokolls nach dem die Datenverarbeitungsanlage 100 arbeitet in Nachrichten gemäß eines zweiten Protokolls umsetzten. Beispielsweise ist die Datenverarbeitungsanlage 100 über das Gateway an ein nicht in Figur 1 dargestelltes weiteres Datennetzwerk anschließbar.

Im Beispiel ist der erste Knoten 101 ein Steuergerät A auf dem ein Nutzerteil einer Dienst-orientierten Funktion abläuft. Der zweite Knoten 102 ist in diesem Beispiel ein Steuergerät B, auf dem ein Anbieterteil dieser Dienst-orientierten Funktion abläuft. Der Dienst, der durch die Dienst-orientierte Funktion geleistet, d.h. angeboten oder genutzt wird ist dabei beliebig. Der Dienst wird durch eine Dienstbeschreibung nach einem bestimmten Protokoll, beispielsweise durch einen Text oder Extensible Markup Language XML, beschrieben. Dieser Beschreibung ist im Beispiel eine Information über den Dienst eindeutig zugeordnet. Die Information über den Dienst ist beispielsweise ein binärer, nummerischer oder alphanummerischer Ausdruck, der im Folgenden als ShortID bezeichnet wird. Diese ShortID wird vorzugsweise eindeutig einem bestimmten Dienst zugeordnet, der auf einem bestimmten Knoten abläuft.

Eine Nachricht, die über die Datenleitung 104 versendbar ist, weist einen Identifizierer zur Arbitrierung zu sendender Nachrichten auf. Der Identifizierer enthält Information über eine Priorität, durch die eine Bearbeitungsreihenfolge von zur Übertragung bereitstehenden Nachrichten bestimmt ist. Der Identifizierer enthält zudem Information über einen Netzwerkknoten, durch die ein Sender der Nachricht eindeutig bestimmt ist. Im Beispiel wird ein Knotenidentifier MAC verwendet. Zusätzlich enthält der Identifizierer die Information über den Dienst, beispielsweise die ShortID, durch die der Dienst bestimmt ist. Dies bedeutet, dass die Nachricht die Funktionalität die sich hinter der Nachricht verbirgt, insbesondere Information über den Dienstanbieter oder den Dienstnutzer, beinhaltet.

Ein beispielhafter Identifizierer 200 ist in Figur 2 schematisch dargestellt.

Der Identifizierer 200 stellt dabei eine Bitfolge dar, die in einem Kopfteil eines Rahmens einer Nachricht angeordnet ist. Der Rahmen enthält zudem auch eine Bitfolge eines nicht in Figur 2 dargestellten Datenteils. Der Rahmen kann zudem weitere Teile umfassen, die beispielsweise Fehlerkorrekturbits enthalten.

Die Information über die Priorität ist beispielsweise in einem ersten Datenfeld 201 angeordnet. Die Information über den Dienst ist beispielsweise in einem zweiten Datenfeld 202 angeordnet. Die Information über den Netzwerkknoten, im Beispiel der Knotenidentifier MAC, ist beispielsweise in einem dritten Datenfeld 203 angeordnet. Ein viertes optionales Datenfeld 204 enthält beispielsweise Information über einen Nachrichtentyp. Bevorzugt sind die Datenfelder im Identifizierer 200 in dieser Reihenfolge angeordnet. Andere Reihenfolgen sind ebenfalls möglich. Die Länge der Bitfolgen in den Datenfeldern kann unterschiedlich oder gleich sein.

Eine Realisierung der Datenverarbeitungsanlage erfolgt vorzugsweise im Rahmen eines Controller Area Netzwerks, bekannt als CAN. CAN ist als ISO 11898 standardisiert und arbeitet nach dem Carrier Sense Multiple Access / Collision Resolution-Verfahren. Dabei werden Kollisionen beim Buszugriff durch Arbitrierung abhängig von einem CAN spezifischen Identifizierer aufgelöst. Dieser Identifizierer weist dabei beispielsweise eine vorgegebene Länge, insbesondere von 11-Bit im "Base frame format" oder 29-Bit im "Extended frame format" auf.

Vorzugsweise wird die Länge der Bitfolge, die die Priorität angibt, die Länge der Bitfolge, die die Information über den Dienst, im Beispiel die ShortID, wiedergibt, die Länge der Bitfolge, die die Information über den Netzwerkknoten, im Beispiel den Knotenidentifier MAC, wiedergibt, und gegebenenfalls die Länge der Bitfolge, die den Nachrichtentyp angibt, so gewählt, dass sich zusammen eine Länge des Identifizierers 200 von insgesamt 11-Bit oder 29-Bit ergibt.

Bevorzugt identifiziert die Information über den Netzwerkknoten, d.h. im Beispiel der Knotenidentifier MAC, eindeutig einen Sender. Im Unterschied zu einer zuvor definierten Kommunikationsmatrix, in der mittels Objekt-Identifizierern nicht eine Geräte Identifikation, sondern der Inhalt der Nachricht zugeordnet wird, ist damit automatisiert eine dynamische Anpassung an eine veränderte Architektur der Datenverarbeitungsanlage 100 möglich. Eine statische Kommunikationsmatrix muss in Kenntnis aller vorher statisch definierter Sender und aller zu erwartender Nachrichten festgelegt sein. Alle Knoten des Netzwerks müssen darüber vollständig oder zumindest über die für sie relevanten Teile der Kommunikationsmatrix Kenntnis haben, um ankommende Nachrichten sinnvoll erfassen zu können.

Im Folgenden werden Teile eines Verfahrens zum Betreiben der Datenverarbeitungsanlage 100 beschrieben, das auch bei dynamischen Änderungen eine zuverlässige Dienst-orientierte Kommunikation ermöglicht.

Die Nachrichten, die im Folgenden beschrieben werden, werden im Beispiel als Broadcast über die Datenleitung 104 gesendet. Dies bedeutet, dass eine gesendete Nachricht von allen Knoten der Datenverarbeitungsanlage 100, die mit der Datenleitung 104 verbunden sind, empfangbar ist.

Die Bearbeitungsreihenfolge von zur Übertragung bereitstehenden Nachrichten ist bevorzugt abhängig von der Priorität bestimmt. Die Bearbeitungsreihenfolge wird dabei beispielsweise abhängig von der Zuordnung der Information über die Priorität mit einer vorgegebenen Priorität oder einer vorgegebenen Prioritätsklasse festgelegt.

Die Bearbeitungsreihenfolge von zur Übertragung bereitstehenden Nachrichten mit derselben Priorität ist vorzugsweise abhängig von der Information über den Dienst, im Beispiel abhängig von der ShortID bestimmt. Dazu wird die Bearbeitungsreihenfolge beispielsweise abhängig von einer Zuordnung der Information über den Dienst, im Beispiel abhängig von der ShortID, zu einer vorgegebenen Priorität oder einer vorgegebenen Prioritätsklasse festgelegt.

Sofern der Identifizierer 200 Information über einen Nachrichtentyp umfasst, kann die Bearbeitungsreihenfolge von zur Übertragung bereitstehenden Nachrichten mit derselben Priorität oder derselben Information über den Dienst auch abhängig vom Nachrichtentyp bestimmt sein. Dazu ist eine Zuordnung von vorgegebenen Nachrichtentypen zu vorgegebener Priorität oder vorgegebener Prioritätsklasse festgelegt.

Diese Zuordnungen zu den jeweiligen Prioritäten sind beispielsweise in einer Liste, vorzugsweise in einem Knoten, gespeichert. Ein Knoten ist dazu ausgebildet die Nachrichten gemäß der ihr zugeordneten Priorität auf der Datenleitung 104 zu senden. Bevorzugt ist die Liste auf jedem Knoten der Datenverarbeitungsanlage 100 gespeichert. Bevorzugt sendet jeder Knoten der Datenverarbeitungsanlage jede Nachricht nach der ihr zugeordneten Priorität.

Bevorzugt wird als Information über die Priorität in der Nachricht, die Priorität gemäß dem CAN Protokoll verwendet. Bevorzugt wird damit der Zugang zur Datenleitung 104 gemäß dem CAN Protokoll festgelegt.

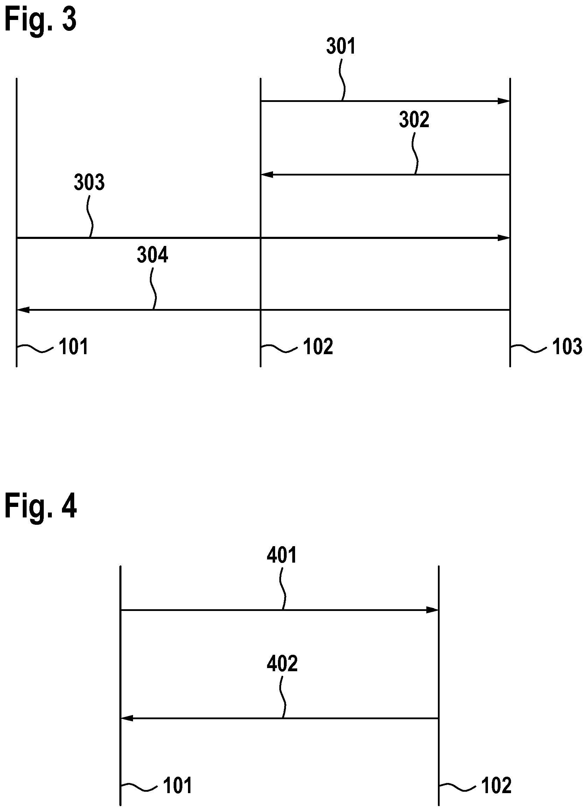

Figur 3 zeigt schematisch einen ersten Signalflussplan gemäß einem Verfahrensteil zur Vergabe oder zur Abfrage von Information über einen Dienst. Im Beispiel wird die ShortID vergeben oder abgefragt.

Zur Registrierung einer Dienst-orientierten Funktion sendet der Anbieterteil der Dienst-orientierten Funktion eine Nachricht 301, Register.

Im Beispiel von Figur 3 läuft der Anbieterteil der Dienst-orientierten Funktion auf dem zweiten Knoten 102 ab. In diesem Beispiel wird die Nachricht 301 vom zweiten Knoten 102 gesendet.

Zur Registrierung der Dienst-orientierten Funktion wird die Nachricht 301, Register, von mindestens einem Knoten empfangen.

Im Beispiel von Figur 3 werden Dienste zentral im dritten Knoten 103 in der Datenverarbeitungsanlage 100 verwaltet. Die Funktion zur Verwaltung läuft im Beispiel auf dem dritten Knoten 103 ab. Es kann auch eine dezentrale Verwaltung vorgesehen sein. In diesem Fall erfolgt die Verwaltung in jedem oder in mehreren der Knoten der Datenverarbeitungsanlage 100.

Zur Verwaltung der Information über die in der Datenverarbeitungsanlage 100 verfügbaren Dienste ist beispielsweise eine Liste, Tabelle, Datenbank oder dergleichen vorgesehen, in der Information über den Dienst einer Beschreibung des Dienstes zugeordnet ist. Diese Zuordnung ist im Beispiel auf dem dritten Knoten 103 abgespeichert. Im Beispiel wird eine bestimmte ShortID einer Beschreibung des Dienstes eindeutig zugeordnet. Beispielsweise wird zur Beschreibung des Dienstes ein vorgegebenes Protokoll verwendet. Im Beispiel wird eine Ausgangssprache, beispielsweise der Text oder die Extensible Markup Language XML verwendet.

Andere Formen der Beschreibung eines Dienstes, beispielsweise die Angabe einer Socket gemäß dem Transmission Control Protocol / Internet Protocol (TCP/IP) ist ebenfalls möglich. Die Information über den Dienst kann beispielsweise auch einer Service-Beschreibung (LongID) eines IP-basierten Protokolls entsprechen. Die Länge der ShortID, insbesondere die Länger der Bitfolge, die die ShortlD im Identifizierer 200 darstellt, ist bevorzugt kürzer als die Länge der Service-Beschreibung (LongID). Es ist auch möglich, über das Gateway vom dritten Knoten 103 eine Service-Beschreibung (LongID) eines Dienstes von außerhalb der Datenverarbeitungsanlage 100 zu erhalten. Gegebenenfalls setzt das Gateway dazu eine externe Nachricht in die Nachricht 301 um.

Im Beispiel ist vorgesehen, die Beschreibung des Dienstes vorzugsweise im Datenteil in der Nachricht 301, Register, zu senden. Alternativ oder zusätzlich kann vorgesehen sein, die Beschreibung des Dienstes in einer weiteren Nachricht oder mehreren weiteren Nachricht (nicht dargestellt) zu senden.

Bei Empfang der Nachricht 301, Register, wird der Beschreibung des Dienstes die Information über den Dienst zugeordnet. Im Beispiel wird eine ShortID erzeugt, und der Beschreibung zugeordnet. Sofern für die empfangene Beschreibung bereits eine Zuordnung zu einer ShortID besteht, wird diese verwendet. Bevorzugt wird als ShortID eine Bitfolge verwendet, die eine vorgegebene Länge, beispielsweise 4 Bit oder 2 Bit bevorzugt 8 Bit beträgt.

In einer Nachricht 302, RegisterACK, wird die Information über den Dienst, im Beispiel die ShortID, vorzugsweise im Datenteil der Nachricht 302 gesendet. Durch die Nachricht 302, RegisterACK, wird die erfolgreiche Registrierung bestätigt. Im Beispiel sendet der dritte Knoten 103 die Nachricht 302. Der zweite Knoten 102 empfängt die Nachricht 302.

Zur Abfrage einer Dienst-orientierten Funktion sendet ein Nutzer eines Dienstes eine Nachricht 303, Whols. Im Beispiel ist vorgesehen, die Information über den Dienst, beispielsweise die ShortID in der Nachricht 303, Whols, vorzugsweise im Datenteil der Nachricht 303 zu senden. Beispielsweis sendet ein Knoten, der eine Beschreibung eines Dienstes benötigt, die Nachricht 303, Whols, um die Beschreibung des Dienstes zu empfangen.

Im Beispiel von Figur 3 läuft der Nutzerteil der Dienst-orientierten Funktion auf dem ersten Knoten 101 ab. In diesem Beispiel wird die Nachricht 303 vom ersten Knoten 101 gesendet.

Bevorzugt ermittelt der erste Knoten 101 auf dem ein Nutzerteil einer Dienst-orientierten Funktion abläuft diese ShortID aus einem Identifizierer 200 einer am ersten Knoten 101 ankommenden Nachricht. Sofern diese ShortID unbekannt ist, wird die Nachricht 303 gesendet.

Zur Abfrage der Dienst-orientierten Funktion wird die Nachricht 303, Whols, von mindestens einem Knoten empfangen.

Im Beispiel von Figur 3 werden Dienste zentral im dritten Knoten 103 in der Datenverarbeitungsanlage 100 verwaltet. Die Funktion zur Verwaltung läuft im Beispiel auf dem dritten Knoten 103 ab. In diesem Falle empfängt der dritte Knoten 103 die Nachricht 303, Whols.

Es kann auch eine dezentrale Verwaltung vorgesehen sein. In diesem Fall erfolgt die Verwaltung in jedem oder in mehreren der Knoten der Datenverarbeitungsanlage 100, die die Nachricht 303, Whols empfangen.

Bei Erhalt der Nachricht 303, Whols, wird die Beschreibung des Dienstes passend zur in der Nachricht 303, Whols, enthaltenen Information über den Dienst aus der Zuordnung ermittelt. Im Beispiel wir die ShortID aus der Nachricht 303, Whols, ermittelt. Dann wird die Beschreibung, die der ShortID zugeordnet ist ermittelt.
Die ermittelte Beschreibung wird in einer Nachricht 304, WhoisACK, gesendet. Im Beispiel wird die Beschreibung des Dienstes gemäß dem vorgegebenen Protokoll übermittelt. Beispielsweise wird die Ausgangssprache, beispielsweise der Text oder die Extensible Markup Language XML verwendet. Es kann auch die Socket gemäß dem Transmission Control Protocol / Internet Protocol (TCP/IP) oder die Service-Beschreibung (LongID) eines IP-basierten Protokolls verwendet werden.

Es kann vorgesehen sein, die Beschreibung des Dienstes in der Nachricht 304, Register, vorzugsweise im Datenteil der Nachricht 304 zu senden. Alternativ oder zusätzlich kann vorgesehen sein, die Beschreibung des Dienstes vorzugsweise im Datenteil in einer weiteren Nachricht oder mehreren weiteren Nachrichten (nicht dargestellt) zu senden.

Im Beispiel sendet der dritte Knoten 103 die Nachricht 304. Der erste Knoten 101 empfängt die Nachricht 304. Es kann auch vorgesehen sein, über das Gateway die Nachrichten 302, 303 und 304 mit einem externen Knoten auszutauschen. Dazu setzt das Gateway die jeweiligen Nachrichten entsprechend um.

Bevorzugt ist keine ShortID doppelt vergeben. Dann kann ein Knoten jederzeit eindeutig die vollständige Service-Beschreibung eines bestimmten Anbieters eines Dienstes abfragen, die der ShortID zugeordnet ist.

Figur 4 zeigt einen zweiten Signalflussplan, der die Dienst-orientierten Kommunikationspattern Publish/Subscribe, Request/Response beziehungsweise Discovery, d.h. Find/Offer, schematisch darstellt.

Durch die Einführung der Dienst-orientierten Kommunikationspattern können Dienst-orientierte Funktionen einfach auf der Datenverarbeitungsanlage 100 dargestellt werden.

Das Request/Response-Verfahren dient vorrangig der einmaldigen Datenabfrage oder einer Anforderung im Sinne eines Remote-Procedure-Calls.

Das Publish/Subscribe Verfahren wird im Rahmen eines 1:n Szenario sowie bei dauerhaftem abonnieren bestimmter Daten verwendet. Ein 1:n Szenario liegt vor, wenn ein Knoten eine Nachricht für viele Empfänger sendet.
Für das Publish/Subscribe Verfahren sind die Nachrichtentypen Request, Response, Subscribe, Publish, Unsubscribe vorgesehen. Diese werden als Nachrichtentyp, beispielsweise als entsprechend kodierte Bitfolge, der Nachricht im vierten Feld des Identifizierer je nach Typ der Nachricht hinzugefügt. Die für die Darstellung dynamischer Kommunikationspfade benötigte Service Discovery, welche ein Finden und Anbieten von Diensten erlaubt, ist genauso in Form der definierten Nachrichtentypen Find/Offer implementiert.

Im Beispiel von Figur 4 läuft auf dem zweiten Knoten 102 der Anbieterteil der Dienst-orientierten Funktion. Der erste Knoten 101 ist der Nutzer des Dienstes. In diesem Fall sendet der erste Knoten 101 eine Nachricht 401 an den zweiten Knoten 102. Die Nachricht 401 wird beispielsweise vom Nutzerteil der Dienst-orientierten Funktion erzeugt. Beispielsweise wird eine Nachricht 401 mit Nachrichtentyp Request, Subscribe, Unsubscribe oder Find erzeugt.

Der erste Knoten 101 insbesondere der Nutzerteil der Dienst-orientierten Funktion ist ausgebildet, den Nachrichtentyp der Nachricht 401 entsprechend des gewünschten Dienstes festzulegen. Bevorzugt wird als Nachrichtentyp eine Bitfolge verwendet, die eine vorgegebene Länge, beispielsweise 4 Bit oder 2 Bit bevorzugt 8 Bit beträgt. Die genannten Nachrichtentypen sind beispielsweise jeweils einer dieser Bitfolgen eindeutig zugeordnet.

Der zweite Knoten 102 ist ausgebildet, den gewünschten Dienst aus einer empfangen Nachricht 401 entsprechend des Nachrichtentyps festzustellen.

Bei Empfang der Nachricht 401 wird beispielsweise der Anbietereil der Dienst-orientierten Funktion informiert, dass der Dienst angefragt ist.

Die Antwort des Dienstes wird abhängig vom gewünschten Dienst vom Anbieterteil der Dienst-orientierten Funktion erzeugt. Im Beispiel wird eine Nachricht mit Nachrichtetyp Response, Publish beziehungsweise Offer erzeugt.

Im Beispiel von Figur 4 sendet der zweite Knoten 102 als Antwort eine Nachricht 402 an den ersten Knoten 101. Die Nachricht 402 ist beispielsweise die Nachricht mit Nachrichtentyp Response, Publish oder Offer. Bevorzugt wird als Nachrichtentyp eine Bitfolge verwendet, die eine vorgegebene Länge, beispielsweise 4 Bit oder 2 Bit bevorzugt 8 Bit beträgt. Die genannten Nachrichtentypen sind beispielsweise jeweils einer dieser Bitfolgen eindeutig zugeordnet.

Bei Empfang der Nachricht 402 wird beispielsweise der Nutzerteil der Dienst-orientierten Funktion informiert, dass der Dienst verfügbar ist.

Bevorzugt löst ein Erkennen des Hinzufügens oder des Entfernens mindestens eines Knotens der mindestens zwei Knoten das Senden der Information über den Dienst, insbesondere der ShortID, aus. Dadurch wird in der Datenverarbeitungsanlage 100 eine automatische Service Discovery durchgeführt.

Das Erkennen eines vorgegebenen Zustands an einem Knoten kann alternativ oder zusätzlich das Senden der Information über den Dienst auslösen. Beispielsweise werden diese Zustände der Dienste anhand der Datentypen ein- oder ausgehender Nachrichten erkannt. Insbesondere können die Datentypen Publish, Subscribe, Unsubscribe, Request, Response, Find oder Offer zur Feststellung des Zustands ausgewertet werden. Bevorzugt werden Dienste die gestartet oder beendet werden sollen derart erkannt.

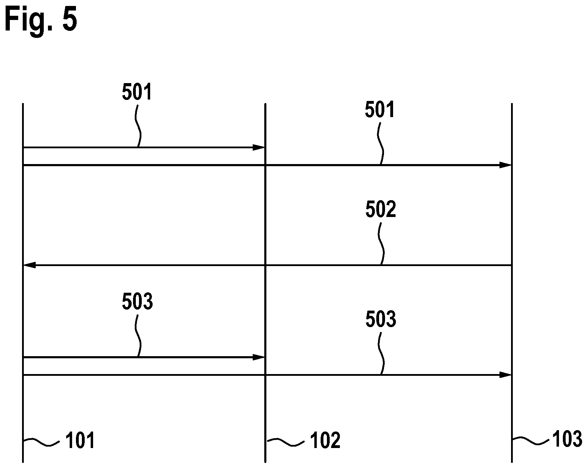

Figur 5 zeigt schematisch einen dritten Signalflussplan, eines Verfahrensteils in dem einem Knoten eine Information über den Netzwerkknoten zugeordnet wird. Im Beispiel wird dem ersten Knoten 101 der Knotenidentifier MAC zugeordnet.

Der Knoten ist dadurch in der Datenverarbeitungsanlage 100 als Sender einer Nachricht an der Information über den Netzwerkknoten, die im Identifizierer 200 enthalten ist, beim Empfänger erkennbar.

Das bedeutet, dass Information über den Netzwerkknoten dem ein Sender zugeordnet ist an mindestens einen der mindestens zwei Knoten gesendet wird. Im Beispiel wird der Knotenidentifier MAC dazu verwendet. Die Information über den Netzwerkknoten, insbesondere der Knotenidentifier MAC, ist beispielsweise eine Bitfolge die pseudo-zufällig erzeugt, oder aus einer vorgegebenen Liste von Bitfolgen entnommen wird. Bevorzugt wird eine Bitfolge verwendet, die eine vorgegebene Länge, beispielsweise 4 Bit oder 2 Bit bevorzugt 8 Bit beträgt.

Beispielsweise wird ein Knotenidentifier Bully Algorithmus unter Verwendung von Broadcast gemäß dem CAN Protokoll eingesetzt.

Im Beispiel sendet der erste Knoten 101 eine Nachricht 501, RequestMAC. Die Nachricht 501 wird vorzugsweise im Broadcast gesendet. Die Information über den Netzwerkknoten, im Beispiel der Knotenidentifier MAC, wird in der Nachricht 501 gesendet.

Der zweite Knoten 102 und der dritte Knoten 103 empfangen die Nachricht 501. Der zweite Knoten 102 und der dritte Knoten 103 analysieren die Nachricht 501 und ermittelt die Information über den Netzwerkknoten, insbesondere den Knotenidentifier MAC.

Ein Knoten, der diesen Knotenidentifier MAC bereits verwendet, erkennt die doppelte Verwendung und erwidert mit einer Nachricht 502, DenyMAC.

Alternativ oder zusätzlich kann auf einem Knoten die Verwaltung der Information über mehrere Netzwerkknoten vorgesehen sein. Beispielsweise ist auf einem Knoten eine Liste der aktuell vergebenen Knotenidentifier MAC gespeichert. In diesem Fall erkennt dieser Knoten die Doppelverwendung und sendet die Nachricht 502, DenyMAC. Dies veranlasst den ersten Knoten 101 dazu, einen anderen Knotenidentifier MAC zu wählen. Dadurch wird einem Knoten ein eindeutiger Knotenidentifier MAC zentral oder dezentral zugewiesen.

Sofern eine doppelte Verwendung der Information über den Netzwerkknoten erkannt wurde, ist bevorzugt eine Wiederholung der Schritte zur Ermittlung und Zuordnung vorgesehen, bis die Zuordnung erfolgreich war. Dies ist beispielsweise nach Ablauf einer vorgegebenen Zeitspanne der Fall. Die Dauer dieser Zeitspanne liegt beispielsweise zwischen 0 - 1 min, 0 ms - 100 ms, 0 ms - 10 ms, 0 - 5 ms, bevorzugt weniger als 100 ms, weniger als 10 ms oder weniger als 5 ms.

Im Beispiel wird einen weiter Nachricht 503, RequestMAC, mit anderem Knotenidentifier MAC gesendet.

Bevorzugt löst ein Erkennen des Hinzufügens oder des Entfernens mindestens eines Knotens der mindestens zwei Knoten das Senden der Information über den Netzwerkknoten, insbesondere des Knotenidentifier MAC, aus. Dadurch wird die Datenverarbeitungsanlage 100 automatisiert an dynamische Kommunikationspfade angepasst. Ein Knoten ist beispielsweise dazu ausgebildet, beim Einschalten eine Nachricht 501 zu erzeugen. Ein Knoten ist beispielsweise dazu ausgebildet, beim Ausschalten eine nachricht zur Freigabe seines Knotenidentifier MAC zu senden.

Das Erkennen eines vorgegebenen Zustands an einem Knoten kann alternativ oder zusätzlich das Senden der Information über den Netzwerkknoten, insbesondere des Knotenidentifier MAC, auslösen.

Die Nachrichten 301 - 304, 401, 402 und 501 - 503 können CAN Protokoll Nachrichten sein. In diesem Fall ist der vom CAN Protokoll vorgegebene Identifier zur Arbitrierung vorgesehen. Die beschriebenen zusätzlichen Bitfolgen sind dann im Datenteil der Nachricht nach CAN Protokoll enthalten.

Im Folgenden wird die Verarbeitung ankommender Nachrichten an einem Beispiel beschrieben. Eine ankommende Nachricht umfasst den Identifizierer 200. Ein Knoten der Datenverarbeitungsanlage 100 ist ausgebildet, Nachrichten mit diesem Identifizierer 200 zu erzeugen. Ein weiterer Knoten ist ausgebildet, Nachrichten mit diesem Identifizierer 200 zu erfassen. Derartige Nachrichten werden insbesondere bei der Ausführung von Dienst-orientierten Funktionen auf der Datenverarbeitungsanlage 100 zwischen jeweiligen Anbieterteilen und Nutzerteilen der Dienst-orientierten Funktion ausgetauscht. Nutzdaten der Dienst-orientierten Funktion sind dabei beispielsweise im Datenteil einer ausgetauschten Nachricht enthalten. Diese Nutzdaten hängen von der Funktion ab und können beliebige Bitfolgen umfassen. Die ausgetauschten Nachrichten können insbesondere bis auf den Identifier 200 genau wie Nachrichten nach dem CAN Protokoll aufgebaut sein. Der Nachrichtenaustausch erfolgt vorzugsweise, bis auf spezifische, durch den Identifizierer 200 bedingte Unterschiede, wie der Nachrichtenaustausch nach CAN Protokoll.

Ein erfasster Identifizierer 200 wird entsprechend der Datenfelder 201, 202, 203, 204 analysiert. Abhängig von der Bitfolge des zweiten Datenfelds 202, d.h. abhängig von der Information über den Dienst, wird ermittelt, ob der erfassende Knoten ein Empfänger der Nachricht ist.

Besonders vorteilhaft ist es, wenn zusätzlich die verwendete Information über den Dienst, im Beispiel die ShortID, eindeutig einen Knoten identifiziert. In diesem Fall ist eine Arbitrierung mittels der Information über den Dienst einfach möglich.

Sofern der erfassende Knoten als Empfänger der Nachricht erkannt wird, wird die ankommende Nachricht, insbesondere der Datenteil der Nachricht, in einem Speicher des erfassenden Knotens übernommen.

Im Beispiel ist zur Analyse eine Liste vorgesehen, die die Information über die Dienste enthält, deren Empfänger der jeweilige Knoten ist. Das bedeutet, dass die Information über den Dienst der Information über den Empfänger zugeordnet ist.

Im Beispiel ist diese Zuordnung, insbesondere die Liste, auf dem jeweiligen Knoten gespeichert. Das bedeutet, dass auf mindestens einem der mindestens zwei Knoten eine Liste vorgesehen ist, die der Information über den Dienst einen Empfänger zuordnet.

Bevorzugt wird so eine an einem Knoten ankommende Nachricht nur dann in einem Speicher dieses Knotens übernommen wird, wenn die Information über den Dienst diesen als Empfänger bestimmt. Dies ermöglicht den selektiven Empfang Dienst-orientierter Nachrichten.

Zudem kann ein Knoten unabhängig vom Sender der Nachricht erkennen, ob eine ankommende Nachricht vom Knoten zu empfangen ist oder nicht. Dies ermöglicht das Empfangen von Nachrichten, die einen bestimmten Dienst betreffen, auch von mehreren Sendern oder von unbekannten Sendern.

Dadurch ist ein Knoten anhand der Information über den Dienst als Empfänger erkennbar. Eine ankommende Nachricht, die für einen Dienst bestimmt ist, der auf dem als Empfänger erkannten Knoten abläuft, wird somit unabhängig vom Sender empfangbar.

Ein erfasster Identifizierer 200 wird bevorzugt abhängig von der Bitfolge des dritten Datenfelds, d.h. abhängig von der Information über den Netzwerkknoten analysiert. Damit wird ermittelt, ob der erfassende Knoten ein Empfänger der Nachricht ist.

Sofern der erfassende Knoten als Empfänger der Nachricht erkannt wird, wird die ankommende Nachricht, insbesondere der Datenteil der Nachricht, in einem Speicher des erfassenden Knotens übernommen.

Im Beispiel ist zur Analyse eine Liste vorgesehen, die die Information über die Netzwerkknoten enthält, deren Empfänger der jeweilige Knoten ist. Das bedeutet, dass die Information über den Netzwerkknoten der Information über den Empfänger zugeordnet ist.

Im Beispiel ist die Zuordnung, insbesondere die Liste, auf dem jeweiligen Knoten gespeichert. Das bedeutet, dass auf mindestens einem der mindestens zwei Knoten eine Liste vorgesehen ist, die der Information über den Netzwerkknoten einen Empfänger zuordnet.

Im Beispiel wird die Zuordnung abhängig vom Knotenidentifier MAC einer ankommenden Nachricht ermittelt.

Besonders vorteilhaft ist es, wenn eine an einem der Knoten ankommende Nachricht nur dann in einem Speicher dieses Knotens übernommen wird, wenn die Information über den Netzwerkknoten, im Beispiel MAC, diesen Knoten als Empfänger bestimmt.

Dies bedeutet, dass eine an einem Knoten ankommende Nachricht nur dann in einem Speicher dieses Knotens übernommen wird, wenn die Information über den Netzwerkknoten diesen als Empfänger bestimmt. Dies ermöglicht den selektiven Empfang von Nachrichten abhängig vom Sender.

Sofern die Information über den Dienst mehrdeutig ist, kann ein empfangender Knoten somit die Nachricht von einem bestimmten Anbieter eines Dienstes selektiv empfangen. Die ist insbesondere für redundant ausgelegte Serviceorientierte Funktionen sinnvoll, bei denen mehrere Knoten der Datenverarbeitungsanlage 100 denselben Anbieterteil einer Dienst-orientierten Funktion ausführen.

Bevorzugt wird eine an einem Knoten ankommende Nachricht abhängig vom Identifizierer 200 gefiltert. Besonders bevorzugt werden nur Nachrichten deren Identifizierer 200 mit einem vorgegebenen Identifizierer übereinstimmt in einen Kommunikationsstack weitergegeben. Dadurch kann die Last einzelner Knoten effektiv reduziert werden.

Besonders bevorzugt ist die Information über den Netzwerkknoten, im Beispiel der Knotenidentifizierer MAC, oder die Information über den Dienst, im Beispiel die ShortID, jederzeit nur einem bestimmten Knoten zugeordnet.

Besonders vorteilhaft ist es, wenn eine an einem der mindestens zwei Knoten ankommende Nachricht nur dann in dem Speicher dieses Knotens übernommen wird, wenn die Information über den Dienst, im Beispiel die ShortID, und die Information über den Netzwerkknoten, im Beispiel MAC, diesen Knoten als Empfänger bestimmt. Dadurch ist auch bei mehrdeutiger Information über den Dienst, d.h. mehrere Knoten bieten denselben Dienst in der Datenverarbeitungsanlage 100 an, eine Arbitrierung mittels der Information über den Netzwerkknoten eindeutig möglich.

Eine Vorrichtung zum Betreiben der Datenverarbeitungsanlage 100 mit mindestens zwei Knoten 101, 102, 103 die über die Datenleitung 104 zur Übertragung der beschriebenen Nachrichten verbindbar ist umfasst einen Prozessor, Speicher und Kommunikationsschnittstellen, die dazu ausgebildet sind, zusammenzuwirken, um die beschriebenen Verfahren auszuführen. Die Vorrichtung besteht beispielsweise aus einem oder mehreren Steuergeräten, die über einen Datenbus verbunden sind. Bis auf die beschriebenen Unterschiede ist die Vorrichtung bevorzugt gemäß einer der CAN Spezifikationen ausgebildet.

Auf den Knoten 101, 102, 103 beziehungsweise der Vorrichtung läuft vorzugsweise ein Computerprogramm ab, das eingerichtet ist die Schritte eines der beschriebenen Verfahrens durchzuführen. Vorzugsweise laufen mehrere Teilprogramme auf den unterschiedlichen Knoten ab, die dazu zusammenwirken.

## Patentansprüche

1. Verfahren zum Betreiben einer Datenverarbeitungsanlage mit mindestens zwei Knoten (101, 102, 103), die über eine Datenleitung (104) zur Übertragung von Nachrichten verbunden sind, wobei eine Nachricht einen Identifizierer (200) zur Arbitrierung zu sendender Nachrichten aufweist, wobei der Identifizierer (200)
- in einem ersten Datenfeld (201) Information über eine Priorität enthält, durch die eine Bearbeitungsreihenfolge von zur Übertragung bereitstehenden Nachrichten bestimmt ist,
**dadurch gekennzeichnet, dass** der Identifizierer (200)
- in einem zweiten Datenfeld (202) Information über einen Dienst enthält, durch die ein Dienst bestimmt ist, und
- in einem dritten Datenfeld (203) Information über einen Netzwerkknoten enthält, durch die ein Sender der Nachricht eindeutig bestimmt ist.

2. Verfahren nach Anspruch 1, **dadurch gekennzeichnet, dass** eine an einem der mindestens zwei Knoten (101, 102, 103) ankommende Nachricht nur dann in einem Speicher dieses Knotens (101, 102, 103) übernommen wird, wenn die Information (202) über den Dienst oder die Information (203) über den Netzwerkknoten diesen Knoten (101, 102, 103) als Empfänger bestimmt.

3. Verfahren nach Anspruch 1, **dadurch gekennzeichnet, dass** eine an einem der mindestens zwei Knoten (101, 102, 103) ankommende Nachricht nur dann in dem Speicher dieses Knotens (101, 102, 103) übernommen wird, wenn die Information (202) über den Dienst und die Information (203) über den Netzwerkknoten diesen Knoten (101, 102, 103) als Empfänger bestimmt.

4. Verfahren nach einem der vorherigen Ansprüche, **dadurch gekennzeichnet, dass** an einem Knoten (101, 102, 103) ankommende Nachrichten abhängig vom Identifizierer (200) gefiltert werden.

5. Verfahren nach Anspruch 4, **dadurch gekennzeichnet, dass** nur Nachrichten deren Identifizierer (200) mit einem vorgegebenen Identifizierer übereinstimmt in einen Kommunikationsstack weitergegeben werden.

6. Verfahren nach einem der vorherigen Ansprüche, **dadurch gekennzeichnet, dass** auf mindestens einem der mindestens zwei Knoten (101, 102, 103) eine Liste vorgesehen ist, die der Information (203) über den Netzwerkknoten einen Empfänger (101, 102, 103) zuordnet oder die der Information (202) über den Dienst einen Empfänger (101, 102, 103) zuordnet.

7. Verfahren nach einem der vorherigen Ansprüche, **dadurch gekennzeichnet, dass** Information (203) über den Netzwerkknoten oder Information (202) über den Dienst an mindestens einen der mindestens zwei Knoten (101, 102, 103) gesendet wird.

8. Verfahren nach Anspruch 7, **dadurch gekennzeichnet, dass** ein Erkennen des Hinzufügens oder des Entfernens mindestens eines Knotens (101, 102, 103) der mindestens zwei Knoten (101, 102, 103) zur Datenverarbeitungsanlage (100) das Senden der Information (203) über den Netzwerkknoten oder der Information (202) über den Dienst auslöst.

9. Verfahren nach einem der Ansprüche 7 oder 8, **dadurch gekennzeichnet, dass** das Erkennen eines vorgegebenen Zustands an einem Knoten (101, 102, 103) das Senden der Information (203) über den Netzwerkknoten oder der Information (202) über den Dienst auslöst.

10. Verfahren nach einem der vorherigen Ansprüche, **dadurch gekennzeichnet, dass** die Information (203) über den Netzwerkknoten oder die Information (202) über den Dienst jederzeit nur einem bestimmten Knoten (101, 102, 103) zugeordnet ist.

11. Verfahren nach einem der vorherigen Ansprüche, **dadurch gekennzeichnet, dass** der Information (202) über den Dienst eine Beschreibung des Dienstes gemäß einem vorgegebenen Protokoll eindeutig zugeordnet ist.

12. Verfahren nach einem der vorherigen Ansprüche, **dadurch gekennzeichnet, dass** die Bearbeitungsreihenfolge von zur Übertragung bereitstehenden Nachrichten abhängig von der Information (201) über die Priorität bestimmt ist.

13. Verfahren nach Anspruch 12, **dadurch gekennzeichnet, dass** die Bearbeitungsreihenfolge abhängig von der Zuordnung der Information (201) über die Priorität mit einer vorgegebenen Priorität oder einer vorgegebenen Prioritätsklasse festgelegt wird.

14. Verfahren nach einem der vorherigen Ansprüche, **dadurch gekennzeichnet, dass** die Bearbeitungsreihenfolge von zur Übertragung bereitstehenden Nachrichten mit derselben Priorität abhängig von der Information (202) über den Dienst bestimmt ist.

15. Verfahren nach Anspruch 14, **dadurch gekennzeichnet, dass** die Bearbeitungsreihenfolge abhängig von der Zuordnung der Information (202) über den Dienst zu einer vorgegebenen Priorität oder einer vorgegebenen Prioritätsklasse festgelegt wird.

16. Verfahren nach einem der vorherigen Ansprüche, **dadurch gekennzeichnet, dass** der Identifizierer (200) Information über einen Nachrichtentyp (204) umfasst, wobei die Bearbeitungsreihenfolge von zur Übertragung bereitstehenden Nachrichten mit derselben Priorität oder derselben Information über den Dienst, abhängig von der Information (204) über den Nachrichtentyp bestimmt ist.

17. Vorrichtung zum Betreiben einer Datenverarbeitungsanlage mit mindestens zwei Knoten (101, 102, 103), die über eine Datenleitung (104) zur Übertragung von Nachrichten verbindbar sind, **dadurch gekennzeichnet, dass** die Vorrichtung dazu ausgebildet ist, das Verfahren nach einem der vorherigen Ansprüche durchzuführen.

18. Computerprogramm, welches wenn es auf einem Prozessor ausgeführt wird eingerichtet ist, die Schritte eines Verfahrens nach einem der Ansprüche 1 bis 16 durchzuführen.

## Claims

1. Method for operating a data processing installation having at least two nodes (101, 102, 103) connected via a data line (104) for transmitting messages, wherein a message has an identifier (200) for arbitrating messages that are to be sent, wherein the identifier (200)
- contains, in a first data field (201), information about a priority, which information determines an order of processing of messages available for transmission
**characterized in that** the identifier (200)
- contains, in a second data field (202), information about a service, which information determines a service, and
- contains, in a third data field (203), information about a network node, which information uniquely determines a sender of the message.

2. Method according to Claim 1, **characterized in that** a message arriving at one of the at least two nodes (101, 102, 103) is transferred to a memory of this node (101, 102, 103) only if the information (202) about the service or the information (203) about the network node determines this node (101, 102, 103) as a recipient.

3. Method according to Claim 1, **characterized in that** a message arriving at one of the at least two nodes (101, 102, 103) is transferred to the memory of this node (101, 102, 103) only if the information (202) about the service and the information (203) about the network node determine this node (101, 102, 103) as a recipient.

4. Method according to one of the preceding claims, **characterized in that** messages arriving at a node (101, 102, 103) are filtered on the basis of the identifier (200).

5. Method according to Claim 4, **characterized in that** only messages whose identifier (200) is concordant with a prescribed identifier are forwarded to a communication stack.

6. Method according to one of the preceding claims, **characterized in that** there is provision on at least one of the at least two nodes (101, 102, 103) for a list that assigns a recipient (101, 102, 103) to the information (203) about the network node or that assigns a recipient (101, 102, 103) to the information (202) about the service.

7. Method according to one of the preceding claims, **characterized in that** information (203) about the network node or information (202) about the service is sent to at least one of the at least two nodes (101, 102, 103).

8. Method according to Claim 7, **characterized in that** detection of the addition or removal of at least one node (101, 102, 103) of the at least two nodes (101, 102, 103) for the data processing installation (100) triggers the sending of the information (203) about the network node or of the information (202) about the service.

9. Method according to either of Claims 7 and 8, **characterized in that** the detection of a prescribed state at a node (101, 102, 103) triggers the sending of the information (203) about the network node or of the information (202) about the service.

10. Method according to one of the preceding claims, **characterized in that** the information (203) about the network node or the information (202) about the service is assigned to only one particular node (101, 102, 103) at a time.

11. Method according to one of the preceding claims, **characterized in that** the information (202) about the service has a uniquely assigned description of the service according to a prescribed protocol.

12. Method according to one of the preceding claims, **characterized in that** the order of processing of messages available for transmission is determined on the basis of the information (201) about the priority.

13. Method according to Claim 12, **characterized in that** the order of processing is stipulated on the basis of the association of the information (201) about the priority with a prescribed priority or with a prescribed priority class.

14. Method according to one of the preceding claims, **characterized in that** the order of processing of messages available for transmission having the same priority is determined on the basis of the information (202) about the service.

15. Method according to Claim 14, **characterized in that** the order of processing is stipulated on the basis of the association of the information (202) about the service with a prescribed priority or a prescribed priority class.

16. Method according to one of the preceding claims, **characterized in that** the identifier (200) comprises information about a message type (204), wherein the order of processing of messages available for transmission having the same priority or the same information about the service is determined on the basis of the information (204) about the message type.

17. Apparatus for operating a data processing installation having at least two nodes (101, 102, 103) connectable via a data line (104) for transmitting messages, **characterized in that** the apparatus is designed to perform the method according to one of the preceding claims.

18. Computer program that, when executed on a processor, is configured to perform the steps of a method according to one of Claims 1 to 16.

## Revendications

1. Procédé pour faire fonctionner une installation de traitement de données comprenant au moins deux noeuds (101, 102, 103) qui sont reliés par une ligne de données (104) pour transmettre des messages, dans lequel un message comporte un identificateur (200) pour l'arbitrage de messages à envoyer,
dans lequel l'identificateur (200) contient
- dans un premier champ de données (201), des informations concernant une priorité, qui déterminent un ordre de traitement de messages en attente de transmission,
**caractérisé en ce que** l'identificateur (200) contient,
- dans un deuxième champ de données (202), des informations concernant un service, qui déterminent un service et,
- dans un troisième champ de données (203), des informations concernant un noeud de réseau, qui déterminent de manière unique un expéditeur du message.

2. Procédé selon la revendication 1, **caractérisé en ce qu'**un message arrivant à l'un desdits au moins deux noeuds (101, 102, 103) n'est accepté dans une mémoire dudit noeud (101, 102, 103) que si les informations (202) concernant le service ou les informations (203) concernant le noeud de réseau désignent ledit noeud (101, 102, 103) comme étant un récepteur.

3. Procédé selon la revendication 1, **caractérisé en ce qu'**un message arrivant à l'un desdits au moins deux noeuds (101, 102, 103) n'est accepté dans la mémoire dudit noeud (101, 102, 103) que si les informations (202) concernant le service et les informations (203) concernant le noeud de réseau désignent ledit noeud (101, 102, 103) comme étant un récepteur.

4. Procédé selon l'une des revendications précédentes, **caractérisé en ce que** les messages arrivant à un noeud (101, 102, 103) sont filtrés en fonction de l'identificateur (200).

5. Procédé selon la revendication 4, **caractérisé en ce que** seuls les messages dont l'identificateur (200) correspond à un identificateur prédéterminé sont transmis dans une pile de communication.

6. Procédé selon l'une des revendications précédentes, **caractérisé en ce qu'**il est prévu une liste sur au moins l'un desdits au moins deux noeuds (101, 102, 103), qui associe un récepteur (101, 102, 103) aux informations (203) concernant le noeud de réseau ou qui associe un récepteur (101, 102, 103) aux informations (202) concernant le service.

7. Procédé selon l'une des revendications précédentes, **caractérisé en ce que** des informations (203) concernant le noeud de réseau ou des informations (202) concernant le service sont envoyées à au moins l'un desdits au moins deux noeuds (101, 102, 103).

8. Procédé selon la revendication 7, **caractérisé en ce qu'**une détection de l'ajout ou de la suppression d'au moins un noeud (101, 102, 103) desdits au moins deux noeuds (101, 102, 103) au système de traitement de données (100) déclenche l'envoi des informations (203) concernant le noeud de réseau ou des informations (202) concernant le service.

9. Procédé selon l'une des revendications 7 ou 8, **caractérisé en ce que** la détection d'un état prédéterminé au niveau d'un noeud (101, 102, 103) déclenche l'envoi des informations (203) concernant le noeud de réseau ou des informations (202) concernant le service.

10. Procédé selon l'une des revendications précédentes, **caractérisé en ce que** les informations (203) concernant le noeud de réseau ou les informations (202) concernant le service sont à chaque instant associées à seulement un noeud déterminé (101, 102, 103).

11. Procédé selon l'une des revendications précédentes, **caractérisé en ce que** les informations (202) concernant le service sont associées de manière unique selon un protocole prédéterminé à une description du service.

12. Procédé selon l'une des revendications précédentes, **caractérisé en ce que** l'ordre de traitement des messages en attente de transmission est déterminé en fonction des informations (201) concernant la priorité.

13. Procédé selon la revendication 12, **caractérisé en ce que** l'ordre de traitement est établi en fonction de l'association des informations (201) concernant la priorité à une priorité prédéterminée ou à une classe de priorité prédéterminée.

14. Procédé selon l'une des revendications précédentes, **caractérisé en ce que** l'ordre de traitement de messages en attente de transmission et ayant la même priorité est déterminé en fonction des informations (202) concernant le service.

15. Procédé selon la revendication 14, **caractérisé en ce que** l'ordre de traitement est établi en fonction de l'association des informations (202) concernant le service à une priorité prédéterminée ou à une classe de priorité prédéterminée.

16. Procédé selon l'une des revendications précédentes, **caractérisé en ce que** l'identificateur (200) comprend des informations concernant un type de message (204), dans lequel l'ordre de traitement de messages en attente de transmission et ayant la même priorité ou les mêmes informations concernant le service est déterminé en fonction des informations (204) concernant le type de message.

17. Dispositif pour faire fonctionner un système de traitement de données comprenant au moins deux noeuds (101, 102, 103) qui peuvent être connectés par une ligne de données (104) pour transmettre des messages, **caractérisé en ce que** le dispositif est conçu pour mettre en oeuvre le procédé selon l'une des revendications précédentes.

18. Programme d'ordinateur qui, lorsqu'il est exécuté sur un processeur, est conçu pour mettre en oeuvre les étapes d'un procédé selon l'une des revendications 1 à 16.
